Europäisches Patentamt

European Patent Office

Office européen des brevets

(11) Publication number : **0 470 051 A1**

# (12) EUROPEAN PATENT APPLICATION

(21) Application number : **91830109.4**

(22) Date of filing : **20.03.91**

(51) Int. Cl.⁵ : **A47C 7/38**

(30) Priority : **30.07.90 IT 3593990 U**

(43) Date of publication of application :
**05.02.92 Bulletin 92/06**

(84) Designated Contracting States :
**BE CH DE FR GB LI LU NL**

(71) Applicant : **AVIOINTERIORS S.R.L.**
**Via Appia, Km 66,400**
**I-04013 Tor Tre Ponti (Latina) (IT)**

(72) Inventor : **Raffaele, Veneruso, c/o**
**Aviointeriors s.r.l.**
**Via Appia, km 66,400**
**I-04013 Tor Tre Ponti (Latina) (IT)**

(74) Representative : **Iannone, Carlo Luigi et al**
**Ing. Barzanò & Zanardo Roma S.p.A. Via**
**Piemonte, 26**
**I-00187 Roma (IT)**

(54) Swinging vertically headrest for an armchair.

(57) A headrest (1) comprising a central structure (2) for supporting the head and two side members (3, 4) which are orientable or swinging between two extreme positions, one of such positions being parallel to said central structure (2) (the clesed position) while the other position is at right angles to the sane (the operative position), the two said side members (3, 4) being pivoted at one of their ends so that they can rotate in the vertical direction with respect to the central structure (2).

FIG. 2

This invention relates to a vertically swinging headrest for an armchair.

More precisely, this invention relates to a headrest of the type mentioned above, which is particularly designed for armchairs or seats of aircraft, even though it can be employed on any kind of armchair, said headrest being so designed as to result in the minimum possible occupied space both in the service position and, above all, in the closed or out-of-service (i.e. the non-operative) position.

It is well known that in all fields of activities, but especially in the field of the tourist travel services, the attainment of the highest degree of comfort for passengers is sought for.

While this aim is more easily attained in the so-called "business class" because no space problems are met with in that case, such problem is much more difficult to solve in the "tourist class" where spaces are obviously reduced to a minimum.

More particularly, in the case of long distance travels, there is the need for giving the user some devices tha allow him/her to bear more easily any discomfort due to the travel.

Many solutions consisting in adjustable headrests have been suggested in the recent times.

In particular, such solutions deal with headrests having in the lateral positions two members or "ears" which are coupled in more or less different ways laterally to the proper headrest, so that they can be adjusted in position along the horizontal direction with respect to the headrest itself, between two extreme positions, which are respectively parallel to the transverse axis of the headrest and at right angles to the same axis.

A solution of that kind, which is surely capable of warranting maximum comfort to the user, has the drawback of being quite bulky, in both positions, so that its adoption in situations where the space available is quite reduced, or anyway where a very bulky structure is preferably to be avoided, is impossible.

Within such context, the Applicant has designed a new kind of swinging headrest that shows a technical solution to the problem of orienting the two members or "ears" which support laterally the head, which solution is capable of reducing to a minimum the space occupied both when said "ears" are parallel to the headrest, and when they are at right angles to the same, i.e. in the operative position.

Such results are obtained, according to the present invention, by proposing the realizatione of a headrest in which two lateral head-supporting members are provided laterally, said supporting members being pivoted on the headrest so as to be adjustable in the vertical direction.

It is evident that a solution of such kind allows a headrest to be adopted which comprises adjustable lateral members for supporting the head even, for instance, in tourist coaches and in aircraft tourist classes, i,e. where the space available is much reduced.

Moreover, it is evident that such solution can be adopted advantageously in any kind of seats or armchairs, and anyway it supplies a useful and comfortable fitting.

Accordingly, it is a specific object of the present invention to provide a headrest that consists of a central, head-supporting structure and of two side members whose orientation can be adjusted between two extreme positions, i.e. a position parallel to the central structure (the closed or non-operative position), and a position at right angles to the same (the operative position), the two said side members being pivoted at one of their ends so that they can rotate in the vertical direction with respect to the central structure.

According to the present invention, the side members can be pivoted on their lower end, so that they can rotate downward from the upper position, starting from the closed position, or they can be pivoted on their upper end so as to rotate from the bottom position upwards, again starting from the closed, i,e, non-operative, position.

Preferably said side members are pivoted directly on the central structure of the headrest or on a support borne by the seat or armchair on which the headrest of the present invention is mounted.

More particularly, the pivoted coupling can be made up of a pivot borne by the central structure or by said support, a drilled member which is integral with said lateral member being assembled on said support in a rotatable way, bearings and/or washers being also provided.

This invention will be disclosed in the following according to some preferred embodiments of the same with particular reference to the figures of the enclosed drawings wherein:

Figure 1 is a perspective view of a headrest according to the present invention in the closed position;

Figure 2 is a partial perspective view of the headrest shown in Figure 1 in the operative position;

Figure 3 is a partial perspective view of a second embodiment of the headrest according to the present invention, in the operative position;

Figure 4 shows an exploded view of the pivoting mechanism of the headrest shown in Figures 1 and 2; and

Figure 5 shows an exploded view of the pivoting mechanism of the headrest of Figure 3.

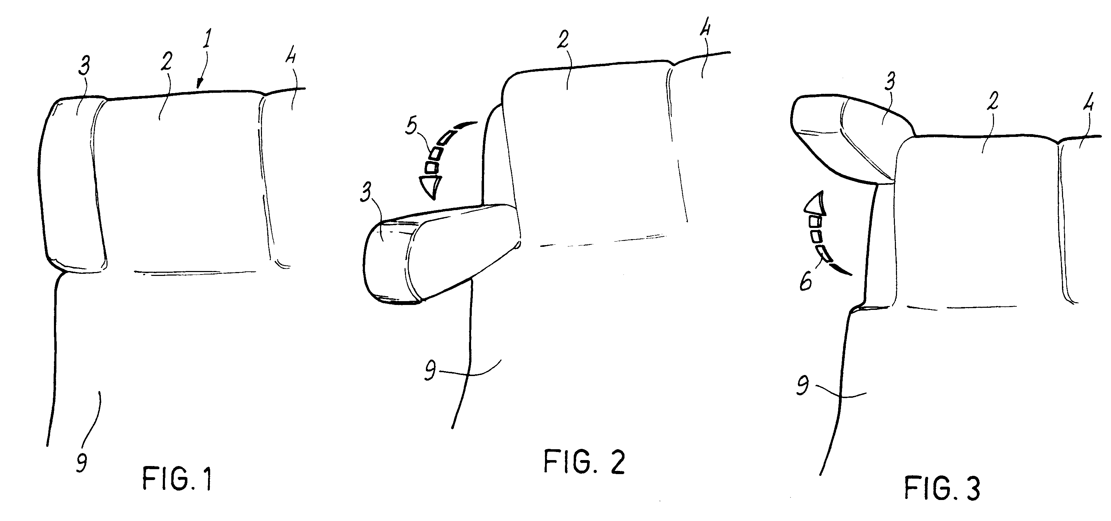

With reference now to Figures 1 and 2, a first kind of embodiment of the headrest 1 according to the present invention can be observed, said embodiment providing a central structure 2 for back-supporting the head, and two side members 3 and 4 for supporting the head laterally.

As can be easily observed, the two members 3 and 4 in the closed position do not give rise to a further occupation of space with respect to the space occupied by a common headrest.

The positioning in the operative conditions also does not require any further side space because the member 3 shifts in the direction of the arrow 5 without interfering with the near space.

The solution according to Figure 3 is similar to that shown in Figures 1 and 2. However in that case the members 3 and 4 (the latter is not shown), for reaching to the operative position must rotate upwards along the direction shown by the arrow 6.

The choice of a solution preferably over the other one will be dictated by the specific requirements, by the kind of armchair or seat on which the headrest 1 is to be assembled, and by the kind of user.

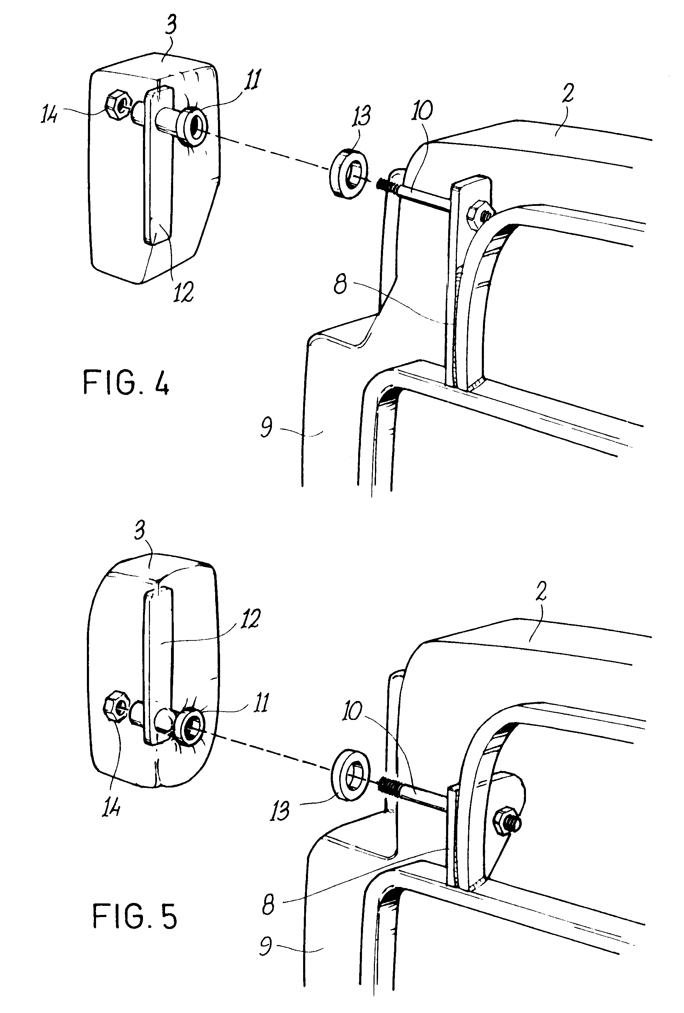

In Figures 4 and 5 a kind of mechanism is shown which can be adopted for realizing the headrest according to the present invention. However, it is quite evident that this is just one of the various different mechanical solutions that can be adopted.

A pivot 10 is fastened to a support 8 which is in turn fastened to the frame 7 of the seat or armchair 9.

A drilled member 11, which is integral with a frame 12 of the lateral member 3 (4) is coupled rotatably to said pivot 10, the washer 13 being interposed between said members.

When said drilled member 11 is placed on said pivot 10, the member 3 (4) is locked by means of a nut 14 that couples to a threading provided on said pivot 10.

This invention has been disclosed with specific reference to some preferred embodiment of the same, but it is to be understood that modifications and/or changes can be introduced by those who are skilled in the art without departing from the spirit and scope of the invention for which a priority right is claimed.

## Claims

1. A headrest comprising a central structure for supporting the head and two side members whose orientation is adjustable, said headrest being characterized in that the two said side members are orientable between two extreme positions, one of then being parallel to the central structure (the closed or non-operative position) while the other one is at right angles to the same (the operative position), said side members being pivoted at one of their ends, so that they can rotate in the vertical direction with respect to the central structure.

2. A headrest according to claim 1, characterized in that said side members are pivoted on the central structure at their lower end, so that they can rotate downwards from the upper position, starting from the closed, i.e. non-operative, position.

3. A headrest according to claim 1, characterized in thatsaid side members are pivoted on the central structure at their upper end, so that they can rotate upwards from the bottom position, starting from the closed position.

4. A headrest according to anyone of the preceding claims, characterized in that said lateral members are pivoted directly on the headrest central structure.

5. A headrest according to anyone of the preceding claims 1-3, characterized in that said side members are pivoted on a supporting member which is borne by the seat or armchair on which the headrest itself is assembled.

6. A headrest according to anyone of the preceding claims 4 or 5, characterized in that said pivoted coupling is realized by means of a pivot which is borne by said central structure or by said support, on which a drilled member which is integral with said lateral member is rotatably assembled, bearings and/or washers being also provided for the rotational motion of said side members.

FIG. 1

FIG. 2

FIG. 3

EP 0 470 051 A1

FIG. 4

FIG. 5

**European Patent Office**

# EUROPEAN SEARCH REPORT

Application Number

EP    91 83 0109

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2 917 109 (MARSH)<br>* the whole document *<br><br>----- | 1-6 | A47C7/38 |
| | | | **TECHNICAL FIELDS SEARCHED (Int. Cl.5 )**<br><br>A47C |

The present search report has been drawn up for all claims

| Place of search | Date of completion of the search | Examiner |
|---|---|---|
| THE HAGUE | 30 OCTOBER 1991 | VANDEVONDELE J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)